# EUROPEAN PATENT APPLICATION

(11) **EP 4 607 636 A1**
(43) Date of publication of application: **27.08.2025**
(21) Application number: 25158325.8
(22) Date of filing: 17.02.2025
(51) Int. Cl.: H01M 10/04, H01M 50/10

(54) **ELECTRODE ASSEMBLY TAPING DEVICE AND METHOD OF RECHARGEABLE BATTERY**

(30) Priority: 15.02.2024 KR 20240022097
(71) Applicant: SAMSUNG SDI CO., LTD., Yongin-si, Gyeonggi-do 17084 (KR)
(72) Inventor: SONG, Jungyeon, Yongin-si 17084 (KR); KIM, Chiyoung, Yongin-si 17084 (KR); LEE, Jehyun, Yongin-si 17084 (KR); SONG, Hojin, Yongin-si 17084 (KR)
(74) Representative: Marks & Clerk LLP

(57) **Abstract**

An electrode assembly taping device of a rechargeable battery comprises: a cell seating jig; a bending jig that is separately disposed at both sides of the cell seating jig to adsorb a cut tape and relatively raise and lower the cell seating jig in a height direction; a gripper that introduces a wound or stacked electrode assembly to seat the electrode assembly on the cell seating jig; and an attachment roller that attaches the tape to the electrode assembly together with a relative raising and lowering operation of the cell seating jig and the bending jig and an operation of the gripper. The cell seating jig comprises a non-contact portion that is in non-contact with an outer line of the tape.

## Description

### FIELD

The present disclosure relates to an electrode assembly taping device and an electrode assembly taping method of a rechargeable battery. The present disclosure further relates to an electrode assembly taping device and an electrode assembly taping method of a rechargeable battery for attaching a tape to an electrode assembly using a cell seating jig.

### BACKGROUND

A rechargeable battery is a battery that repeatedly performs charging and discharging, unlike a primary battery. A small-capacity rechargeable battery is generally used in a portable small electronic device such as a mobile phone, a laptop computer, or a camcorder. A large-capacity and high-density rechargeable battery is generally used as a power source for driving a motor of a hybrid vehicle or an electric vehicle or an energy storage device of the hybrid vehicle or the electric vehicle.

### SUMMARY

Embodiments of the present disclosure are to provide an electrode assembly taping device of a rechargeable battery that prevents an adhesive of a tape from being deposited on a cell seating jig when an electrode assembly seated on the cell seating jig is taped with the tape.

Embodiments of the present disclosure are to provide an electrode assembly taping method of a rechargeable battery that prevents an adhesive of a tape from depositing on a cell seating jig when an electrode assembly seated on the cell seating jig is taped with the tape.

An electrode assembly taping device of a rechargeable battery according to some embodiments of the present disclosure comprises: a cell seating jig; a bending jig separately disposed at both sides of the cell seating jig, the bending jig capable of adsorbing a cut tape and relatively raising and/or lowering the cell seating jig in a height direction; a gripper capable of introducing a wound or stacked electrode assembly and seating the electrode assembly on the cell seating jig; and an attachment roller capable of attaching the tape to the electrode assembly together with a relative raising and lowering operation of the cell seating jig and the bending jig and an operation of the gripper. The cell seating jig comprises a non-contact portion that is not in contact with an outer portion of the tape.

The gripper is capable of attaching a lower surface of the electrode assembly to the tape by seating the electrode assembly, the cell seating jig and the bending jig are capable of performing primary bending of the tape by relatively raising and lowering the cell seating jig and attaching the tape to a side surface of the electrode assembly, and the attachment roller is capable of rolling on an upper surface of the bending jig and an upper surface of the electrode assembly to perform secondary bending of the tape and attaching the tape to the upper surface of the electrode assembly.

The non-contact portion may be formed as a cutout portion.

The non-contact portion may be disposed to correspond to both sides of the electrode assembly along a width direction, and may include a first cutout portion and a second cutout portion formed to correspond to both ends of the tape in a length direction.

In the length direction, both ends of the tape may be disposed at the first cutout portion and the second cutout portion such that the both ends of the tape are not in contact with the cell seating jig.

The non-contact portion may be formed as an escape groove.

The non-contact portion may be disposed to correspond to both sides of the electrode assembly along a width direction, and comprises a first escape groove and a second escape groove, the first escape groove and a second escape groove formed to correspond to both ends of the tape in a length direction and a third escape groove connected to an end of the first escape groove and an end of the second escape groove corresponding to an end portion of the tape in the width direction.

In the length direction, both ends of the tape may be disposed at the first escape groove and the second escape groove such that both ends of the tape are not in contact with the cell seating jig, and in the width direction, one end of the tape may be disposed at the third escape groove such that the one end of the tape is not in contact with the cell seating jig.

The non-contact portion may be set at a gap spaced apart from the tape adsorbed on the bending jig.

The non-contact portion may be disposed to correspond to both sides of the electrode assembly along a width direction, and the cell seating jig has a width less than a gap between the both tapes in the width direction.

Both ends of the tape in a length direction and one end of the tape in the width direction may be disposed between an end portion of the cell seating jig and an end portion of the bending jig in the width direction such that said both ends of the tape in a length direction and the one end of the tape in the width direction are not in contact with the cell seating jig.

The cell seating jig may comprises a first width portion having a width along a width direction of the electrode assembly and a second width portion at a central portion of the electrode assembly along a length direction, the second width having a width less than the first width, and the bending jig may be spaced apart by a first vertical gap, a second vertical gap, and a first horizontal gap set between outer portions of the first width portion and the second width portion disposed in a length direction of the electrode assembly.

The non-contact portion may include the first vertical gap, the second vertical gap, and the first horizontal gap formed between the outer portions of the first width portion and the second width portion and the bending jig.

In the length direction, both ends of the tape may be disposed in the first vertical gap and the second vertical gap such that both ends of the tape are not in contact with the cell seating jig, and in the width direction, one end of the tape may be disposed in the second gap such that the one end of the tape is not in contact with the cell seating jig.

The non-contact portion may comprises a Teflon resin layer provided on the cell seating jig.

An electrode assembly taping method of a rechargeable battery according to embodiments of the present disclosure includes: a first step comprising vacuum-adsorbing a cut tape with a bending jig separated from a cell seating jig; a second step comprising attaching the tape to a wound or stacked electrode assembly; and a third step comprising taking out the electrode assembly to which the tape is attached from a cell seating jig with a gripper. In the first step, an outer portion of the tape is disposed at a non-contact portion of the cell seating jig not to be in contact with the cell seating jig.

The second step may include: a first sub-step comprising introducing the electrode assembly by the gripper such that the electrode assembly is seated on the cell seating jig and attaching the tape to a lower surface of the electrode assembly; a second sub-step comprising attaching the tape to a side surface of the electrode assembly by bending the tape with both bending jigs while relatively moving the cell seating jig and the bending jig in a height direction; and a third sub-step of attaching the tape to an upper surface of the electrode assembly by bending with an attachment roller after a relative movement of the cell seating jig and the bending jig is completed.

In the first step, both ends of the tape in a length direction of the electrode assembly may be respectively disposed at a first cutout portion and a second cutout portion of the cell seating jig at both sides of the electrode assembly along a width direction such that said both ends of the tape in the length direction of the electrode assembly are not in contact with the cell seating jig.

In the first step, both ends of the tape in a length direction of the electrode assembly may be respectively disposed at a first escape groove and a second escape groove of the cell seating jig at both sides of the electrode assembly along a width direction such that said both ends of the tape in the length direction of the electrode assembly are not in contact with the cell seating jig, and in the width direction, one end of the tape may be disposed at a third escape groove connecting the first escape groove and the second escape groove such that the one end of the tape is not in contact with the cell seating jig.

In the first step, both ends of the tape in a length direction of the electrode assembly and one end of the tape in a width direction may be disposed between an end portion of the cell seating jig and an end portion of the bending jig in the width direction at both sides of the width direction of the electrode assembly such that said both ends of the tape in a length direction and the one end of the tape in a width direction are not in contact with the cell seating jig.

In the first step, both ends of the tape in a length direction may be disposed at a first vertical gap and a second vertical gap between a pair of first width portions disposed at both sides of the electrode assembly along the length direction of the cell seating jig, such that said both ends of the tape in a length direction are not in contact with the cell seating jig, and one end of the tape in a width direction may be disposed at a second gap between a second width portion disposed at a middle of a length direction and the bending jig, such that the one end of the tape in a width direction is not in contact with the cell seating jig.

The embodiments of the present disclosure may include a non-contact portion in a cell seating jig so that the cell seating jig is in non-contact with an outer line of a tape. Thus, when an electrode assembly seated in the cell seating jig is taped with the tape that is vacuum-adsorbed on a bending jig, it is possible to prevent an adhesive of the tape from being deposited on the cell seating jig. Therefore, in the embodiments, a stain may not occur in the electrode assembly after the taping, and detachment of an electrode plate and lifting (or separation) of a case may be prevented after primary sealing.

At least some of the above and other features of the invention are set out in the claims.

### BRIEF DESCRIPTION OF THE DRAWINGS

FIG. 1 is a flowchart of an electrode assembly taping method of a rechargeable battery according to some embodiments of the present disclosure.
FIG. 2 is a cross-sectional view of an electrode assembly taping device of the rechargeable battery according to some embodiments of the present disclosure, and is a cross-sectional view of a first step of vacuum-adsorbing a tape among the electrode assembly taping method of FIG. 1.
FIG. 3 follows FIG. 2, and is a cross-sectional view of a second step in which the tape is attached to a lower surface of the electrode assembly and the tape is continuously attached to a side surface and an upper surface of the electrode assembly by primary and secondary bending of the tape, according to some embodiments.
FIG. 4 follows FIG. 3, and is a cross-sectional view of a third step of taking out the electrode assembly to which the tape is attached with a gripper, according to some embodiments.
FIG. 5 is a plan view of a cell seating jig and a bending jig applied to the electrode assembly taping device of the rechargeable battery according to some embodiments of the present disclosure.
FIG. 6 is a plan view in a state in which the tape is vacuum-adsorbed to the cell seating jig and the bending jig of FIG. 5, according to some embodiments.
FIG. 7 is a plan view of a cell seating jig and a bending jig applied to an electrode assembly taping device of the rechargeable battery according to some embodiments of the present disclosure.
FIG. 8 is a plan view in a state in which a tape is vacuum-adsorbed to the cell seating jig and the bending jig of FIG. 7, according to some embodiments.
FIG. 9 is a plan view in a state in which a tape is vacuum-adsorbed to a cell seating jig and a bending jig applied to an electrode assembly taping device of the rechargeable battery according to some embodiments of the present disclosure.
FIG. 10 is a plan view of a cell seating jig and a bending jig applied to an electrode assembly taping device of the rechargeable battery according to some embodiments of the present disclosure.
FIG. 11 is a plan view in a state in which a tape is vacuum-adsorbed to the cell seating jig and the bending jig of FIG. 10, according to some embodiments.
FIG. 12 is a plan view in a state in which a tape is vacuum-adsorbed to a cell seating jig and a bending jig applied to an electrode assembly taping device of the rechargeable battery according to a fifth embodiment of the present disclosure, according to some embodiments.

### DETAILED DESCRIPTION

The rechargeable battery comprises an electrode assembly for charging and discharging a current, a case or a pouch for accommodating the electrode assembly and an electrolyte, and an electrode terminal connected to the electrode assembly to draw the electrode assembly out to the outside of the case or the pouch.

The electrode assembly comprises a jelly roll type formed by winding an electrode plate and a separator and a stack type formed by stacking an electrode plate and a separator. After the electrode assembly is accommodated in a case with an exterior material, a portion of an outermost surface thereof is taped with a tape to prevent movement.

After high-temperature cycles (for example, 200 cycles) of the rechargeable battery is performed, a protrusion phenomenon may occur at one end portion of the tape due to a thickness abnormality. As a result of disassembling and analyzing secondary batteries and/or portions thereof after the completion of stack processes of the electrode assembly and/or assembly processes of the secondary battery, a stain may be observed at a problem occurrence position after the taping. Detachment of the electrode plate and lifting of the case may also be observed at the problem occurrence position after primary sealing. Such detachment may be the result of contamination from a cell seating jig and an attachment roller due to deposited adhesive on the cell seating jig.

Embodiments of the present disclosure will be described more fully hereinafter with reference to the accompanying drawings so that those skilled in the art can easily implement the embodiments. The present disclosure may be modified in various different ways, all without departing from the scope of the present disclosure. In order to clearly describe the present disclosure, parts or portions that are irrelevant to the description are omitted, and identical or similar constituent elements throughout the specification are denoted by the same reference numerals.

In some embodiments, an electrode assembly of a secondary battery is configured to be charged and discharged, and includes a jelly roll type formed by winding an electrode plate and a separator and a stack type formed by stacking an electrode plate and a separator.

Although not separately shown in the drawings, the electrode assembly may be embedded in a can-type or pouch-type case together with an electrolyte to form the secondary battery. In this case, after the electrode assembly is accommodated in the case, a portion of an outermost surface thereof is taped with a tape to prevent movement.

For example, the electrode plate may form a positive electrode by coating a positive electrode active material on both surfaces of a substrate of an electrode formed of an aluminum (Al) foil, or may form a negative electrode by coating a negative electrode active material on a substrate of an electrode formed of a copper (Cu) foil.

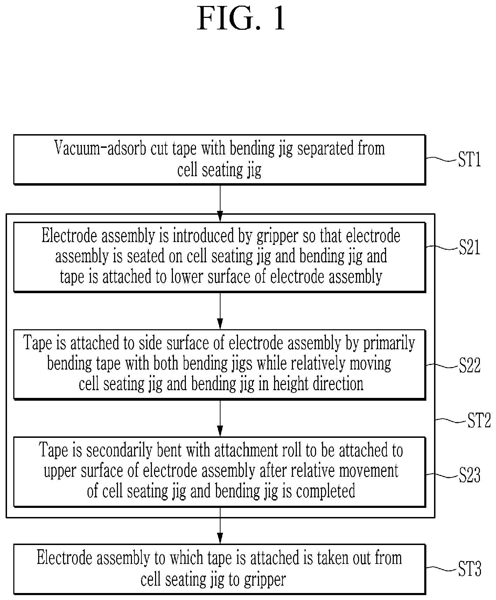

FIG. 1 is a flowchart of an electrode assembly taping method of a rechargeable battery according to embodiments of the present disclosure. Referring to FIGS. 1-3, the electrode assembly taping method of the embodiments of the present disclosure may tape a wound or stacked electrode assembly 40 with a tape 30, and may include a first step ST1, a second step ST2, and a third step ST3.

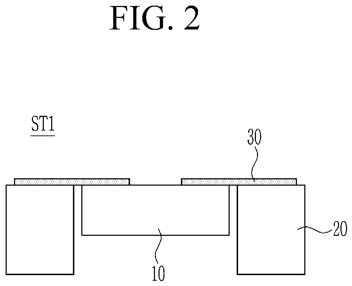

FIG. 2 is a cross-sectional view of an electrode assembly taping device of the rechargeable battery according to some embodiments of the present disclosure, and is a cross-sectional view of a first step of vacuum-adsorbing a tape among the electrode assembly taping method of FIG. 1.

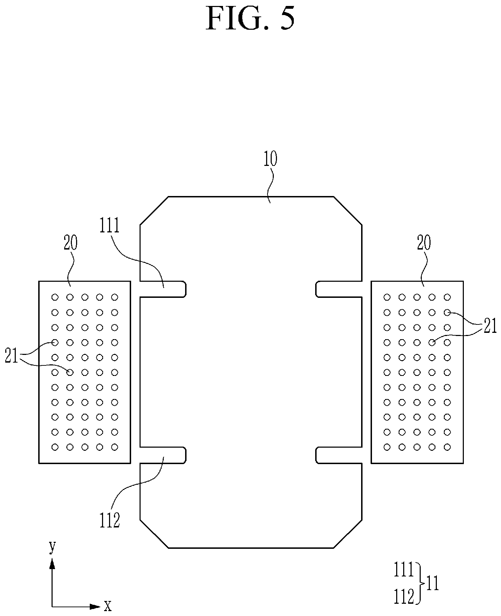

Referring to FIG. 1 and FIG. 2, the first step ST1 may vacuum-adsorb a cut tape 30 with a bending jig 20 separated from a cell seating jig 10. In some embodiments, the bending jig 20 may include a plurality of adsorption holes 21 (as shown in FIG. 5) to provide vacuum adsorption power to the tape 30.

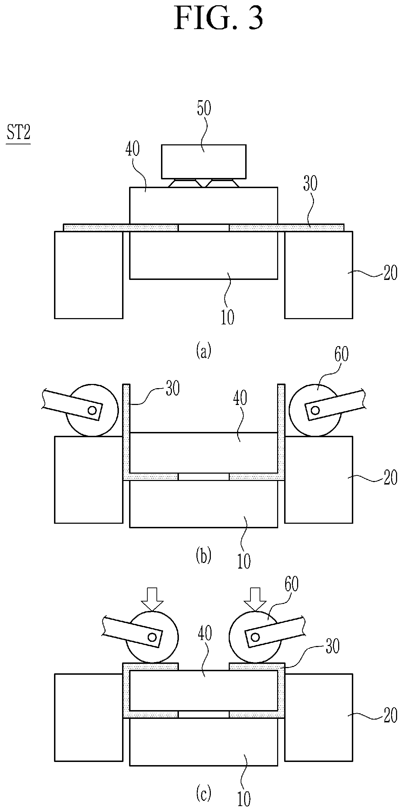

FIG. 3 follows FIG. 2, and is a cross-sectional view of a second step in which the tape is attached to a lower surface of the electrode assembly and the tape is continuously attached to a side surface and an upper surface of the electrode assembly by primary and secondary bending the tape.

Referring to FIG. 1 and FIG. 3, in the second step ST2, the electrode assembly 40 may be introduced (or inserted) with a gripper 50, and the tape 30 may be attached to the wound or stacked electrode assembly 40. In this case, an attachment roller 60 may be used.

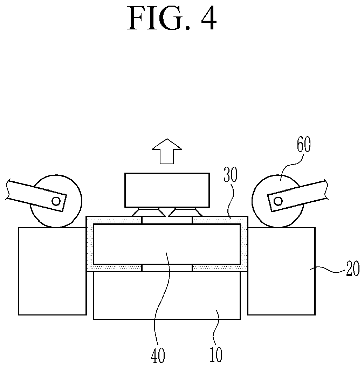

FIG. 4 follows FIG. 3, and is a cross-sectional view of a third step of taking out the electrode assembly to which the tape is attached with a gripper. Referring to FIG. 1 and FIG. 4, in the third step ST3, the electrode assembly 40 to which the tape 30 is attached may be taken out from the cell seating jig 10 with the gripper 50.

Hereinafter, in order to describe the electrode assembly taping method in detail, the electrode assembly taping device will first be described in detail.

FIG. 5 is a plan view of a cell seating jig and a bending jig applied to the electrode assembly taping device of the rechargeable battery according to some embodiments of the present disclosure. Referring to FIGS. 2-5, the electrode assembly taping device, according to some embodiments, may include the cell seating jig 10, the bending jig 20, the gripper 50, and the attachment roller 60.

The cell seating jig 10 may be configured to seat the wound or stacked electrode assembly 40. For example, the cell seating jig 10 may include a non-contact portion 11 that is not in contact with a portion of the perimeter the tape 30.

Thus, when the tape 30 is vacuum-adsorbed to the bending jig 20, the tape 30 may be partially disposed at the cell seating jig 10, but an outer portion of the tape 30 (e.g., a portion of the perimeter of the tape 30) may be disposed at the non-contact portion 11. Therefore, exposed adhesive at an outer portion of the tape 30 may not be in contact with the cell seating jig 10, such that the adhesive disposed at the outer portion may not be attached to the cell seating jig 10. As a result, a phenomenon in which the adhesive of the tape 30 is gradually deposited on the cell seating jig 10 may be advantageously mitigated.

As an example, the non-contact portion 11 may be formed as a cutout portion. The non-contact portion 11 may be disposed corresponding to both sides of the electrode assembly 40 along a width direction (an x-axis direction), and may include a first cutout portion 111 and a second cutout portion 112 formed to correspond to both ends of the tape 30 in a length direction (a y-axis direction) of the electrode assembly 40.

Therefore, the first cutout portion 111 and the second cutout portion 112 may limit the exposure of the adhesive at both ends of the tape 30 along the length direction from being attached to and deposited on the cell seating jig 10.

The first cut portion 111 and the second cutout portion 112 may be formed by cutting the cell seating jig 10 in a vertical direction at a portion where both sides of the tape 30 may be crossed, or bridged, by adhesive, whereby the adhesive may be concentrated or present in a greater amount, so that a situation where the adhesive is concentrated, and thus at which it may be adhered to the cell seating jig 10, may be effectively mitigated.

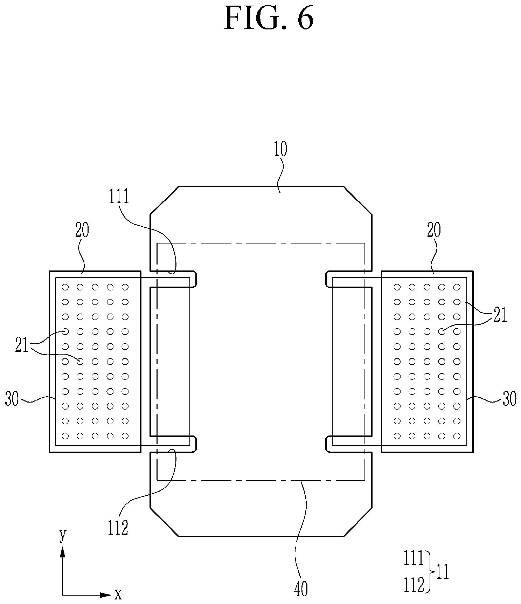

FIG. 6 is a plan view in a state in which the tape is vacuum-adsorbed to the cell seating jig and the bending jig of FIG. 5. Referring to FIG. 5 and FIG. 6, in the length direction (the y-axis direction), both ends (edges) of the tape 30 may be disposed at the first cutout portion 111 and the second cutout portion 112 not to be in contact with the cell seating jig 10.

In the first step ST1, the outer portion of the tape 30 may be disposed at the non-contact portion 11 of the cell seating jig 10 such that the outer portion is not in contact with the cell seating jig 10. The first cutout portion 111 and the second cutout portion 112 may have a width and a length sufficient to accommodate both ends of the tape 30 in the y-axis direction and the x-axis direction.

In the first step ST1 of an electrode assembly taping method, in accordance with some embodiments, both ends of the tape 30 in the length direction (along the y-axis) of the electrode assembly 40 may be respectively disposed at the first cutout portion 111 and the second cutout portion 112 of the cell seating jig 10 at both sides of the electrode assembly 40 along the width direction (the x-axis direction), such that both ends of the tape 30 are not in contact with the cell seating jig 10.

As a result, the adhesive exposed at an outer portion of the cutting line of the tape 30 may be at least partially prevented from being attached to the cell seating jig 10 and being gradually deposited over time. Therefore, in some embodiments, a stain may not occur on the electrode assembly 40 after the taping, and detachment of an electrode plate and lifting of a case may be prevented after primary sealing.

For example, the adhesive of the tape 30 may not provide an adhesive strength between the case and a substrate of a negative electrode provided at an outermost portion of the electrode assembly 40. Thus, the adhesive of the tape 30 may not affect a coupling force between the substrate of the negative electrode and an active material.

The bending jig 20 may be separately disposed at both sides of the cell seating jig 10 to adsorb the cut tape 30.

Referring to FIGS. 2 to 4, the bending jig 20 and the cell seating jig 10 may be relatively raised and lowered in a height direction (a z-axis direction). Although not separately shown in the drawings, the bending jig may be fixed and the cell seating jig may be raised and lowered, or the bending jig may be raised and lowered and the cell seating jig may be fixed.

Referring back to FIG. 3 and FIG. 4, the gripper 50 may introduce the wound or stacked electrode assembly 40 to seat the electrode assembly 40 on the cell seating jig 10 (see FIG. 3(a)). The attachment roller 60 may attach the tape 30 to the electrode assembly 40 together with a relative raising and lowering operation of the cell seating jig 10 and the bending jig 20 and an operation of the gripper 50 (see FIG. 3(b) and FIG. 3(c)).

The gripper 50 may attach a lower surface of the electrode assembly 40 to the tape 30 by seating the electrode assembly 40 onto the tape 30. For example, a non-adhesive surface of the tape 30 may be vacuum-adsorbed to the bending jig 20, and an adhesive surface of the tape 30 may be exposed upward to wait for attachment to the electrode assembly 40.

The cell seating jig 10 and the bending jig 20 may perform primary bending of the tape 30 by relative raising and lowering (a movement from a process of FIG. 3(a) to a process of FIG. 3(b)), and may attach the tape 30 to a side surface of the electrode assembly 40 (the movement from the process of FIG. 3(a) to the process of FIG. 3(b)). The attachment roller 60 may roll on an upper surface of the bending jig 20 and an upper surface of the electrode assembly 40 to perform secondary bending of the tape 30 (a movement from a process of FIG. 3(b) to a process of FIG. 3(c)), and may attach the tape 30 to the upper surface of the electrode assembly 40 (the movement from the process of FIG. 3(b) to the process of FIG. 3(c)).

In the electrode assembly taping method, in accordance with certain embodiments, the second step ST2 may include a first sub-step ST21, a second sub-step ST22, and a third sub-step ST23. In the first sub-step ST21, the electrode assembly 40 may be introduced with the gripper 50 so that the electrode assembly 40 is seated (or settled) on the cell seating jig 10, and the tape 30 may be attached to the lower surface of the electrode assembly 40.

In the second sub-step ST22, the tape 30 may be attached to the side surface of the electrode assembly 40 by primarily bending the tape 30 with both bending jigs 20 while relatively moving the cell seating jig 10 and the bending jig 20 in the height direction (the z-axis direction).

In the third sub-step ST23, after a relative movement of the cell seating jig 10 and the bending jig 20 is completed, the tape 30 may be secondarily bent with the attachment roller 60 to be attached to the upper surface of the electrode assembly 40. Thus, the taping of the tape 30 may be completed by wrapping the lower surface, the side surface, and the upper surface of the electrode assembly 40 at both sides of the electrode assembly 40 in the width direction. A separate bending jig 20 and attachment roller 60 may be provided for each side of two opposing sides of the electrode assembly, as shown.

Hereinafter, various embodiments of the present disclosure will be described. A description of a configuration that is the same as the first embodiment and the previously described embodiment will be omitted, and a description of a configuration that is different from them will be described.

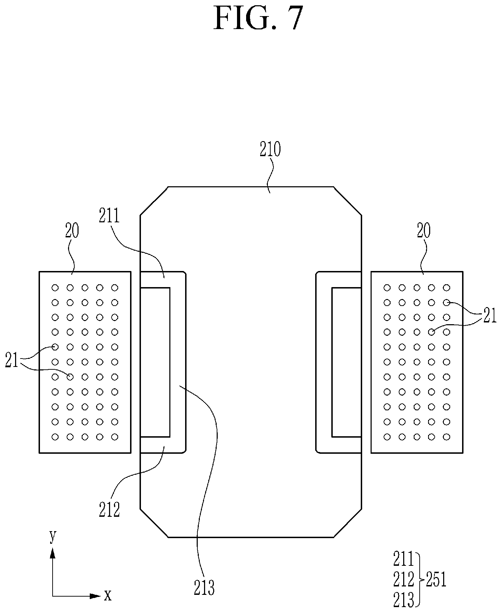

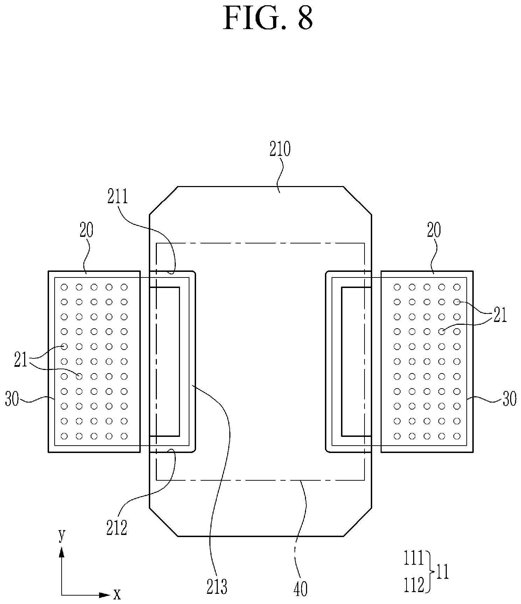

FIG. 7 is a plan view of a cell seating jig and a bending jig applied to an electrode assembly taping device of the rechargeable battery according to some embodiments of the present disclosure, and FIG. 8 is a plan view in a state in which a tape is vacuum-adsorbed to the cell seating jig and the bending jig of FIG. 7, according to some embodiments.

Referring to FIG. 7 and FIG. 8, a non-contact portion 251 may be formed as an escape groove. The non-contact portion 251 may be disposed corresponding to both sides of the electrode assembly 40 along a width direction (an x-axis direction), and may include a first escape groove 211, a second escape groove 212, and a third escape groove 213 formed to correspond to both ends of the tape 30 in a length direction (a y-axis direction) of the electrode assembly 40. The third escape groove 213 may be formed by connecting an end of the first escape groove 211 and an end of the second escape groove 212 corresponding to the end portion of the tape 30 in the width direction.

Thus, the first escape groove 211, the second escape groove 212, and the third escape groove 213 may prevent exposed adhesive at both ends of the tape 30 along the length direction (the y-axis direction) and one end of the tape 30 along the width direction (the x-axis direction) from being attached to and deposited on a cell seating jig 210.

The first escape groove 211, the second escape groove 212, and the third escape groove 213 may be formed at the cell seating jig 210 at a portion where both sides of the tape 30, and the one end of the tape 30, may be crossed or bridged, such that the adhesive is concentrated or present in a greater amount, so that a situation where the adhesive is concentrated, and thus at which it may be adhered to the cell seating jig 10, may be effectively prevented.

In the length direction (the y-axis direction), both ends of the tape 30 may be disposed in the first escape groove 211 and the second escape groove 212 such that both ends of the tape 30 are not in contact with the cell seating jig 210, and in the width direction (the x-axis direction), one end of the tape 30 may be disposed in the third escape groove 213 such that said one end of the tape 30 is not in contact with the cell seating jig 210.

In some embodiments, in a first step ST1 of an electrode assembly taping method, both ends of the tape 30 in the length direction of the electrode assembly 40 may be respectively disposed at the first escape groove 211 and the second escape groove 212 of the cell seating jig 210 at both sides of the electrode assembly 40 along the width direction (the x-axis direction), such that both ends of the tape 30 in the length direction are not in contact with the cell seating jig 210.

In the first step ST1, one end of the tape 30 may be disposed in the third escape groove 213 connecting the first escape groove 211 and the second escape groove 212 in the width direction (the x-axis direction) of the electrode assembly 40, so that the one end of the tape 30 in the width direction is not in contact with the cell seating jig 210.

As a result, the adhesive exposed at an outer portion of a cutting line of the tape 30 may be prevented from being attached to the cell seating jig 210 and being gradually deposited over time. Therefore, in some embodiments, a stain may not occur in the electrode assembly 40 after the taping, and detachment of an electrode plate and lifting of a case may at least partially be prevented after primary sealing.

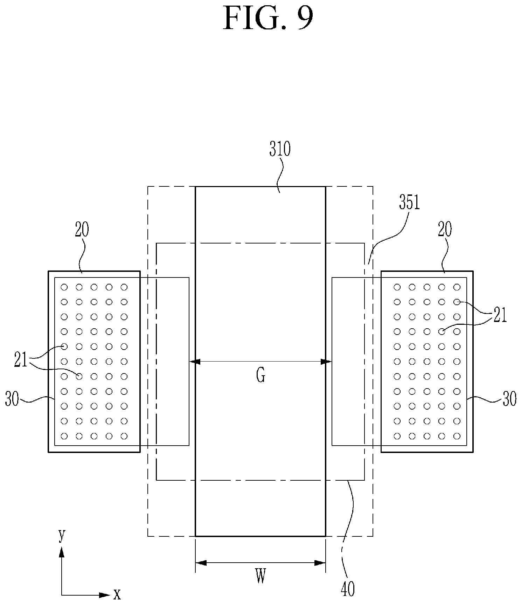

FIG. 9 is a plan view in a state in which a tape is vacuum-adsorbed to a cell seating jig and a bending jig applied to an electrode assembly taping device of the rechargeable battery according to embodiments of the present disclosure. Referring to FIG. 9, a non-contact portion 351 may be set at a gap spaced apart from the tape 30 adsorbed on the bending jig 20.

The non-contact portion 351 may be disposed corresponding to both sides of the electrode assembly 40 in the width direction (the x-axis direction), and the cell seating jig 310 may be formed to have a width W smaller than a gap G between both the tapes 30 in the width direction (the x-axis direction).

Therefore, both ends of the tape 30 along the length direction (the y-axis direction) and one end of the tape 30 along the width direction (the x-axis direction) may be disposed between an end portion of the cell seating jig 310 and an end portion of the bending jig 20 in the width direction (the x-axis direction) such that both ends of the tape 30 along the length direction and the one end of the tape 30 along the width direction are not in contact with the cell seating jig 310. In some embodiments, an adhesive exposed at both ends and the end portion of the tape 30 is prevented from being attached to and deposited on the cell seating jig 310.

In the length direction (the y-axis direction), both ends of the tape 30 may not be in contact with the cell seating jig 310, and in the width direction (the x-axis direction), one end of the tape 30 may not be in contact with the cell seating jig 310.

In some embodiments, in a first step ST1 of an electrode assembly taping method, both ends of the tape 30 in the length direction of the electrode assembly 40 and one end of the tape 30 in the width direction may be disposed between the end portion of the cell seating jig 310 and the end portion of the bending jig 20 in the width direction at both sides of the electrode assembly 40 along the width direction (the x-axis direction) such that both ends of the tape 30 in the length direction and one end of the tape 30 in the width direction are not in contact with the cell seating jig 310.

As a result, the adhesive exposed at an outer portion of a cutting line of the tape 30 may be at least partially prevented from being attached to the cell seating jig 310 and being gradually deposited over time. Therefore, in some embodiments, a stain may not occur on the electrode assembly 40 after the taping, and detachment of an electrode plate and lifting of a case may be prevented after primary sealing.

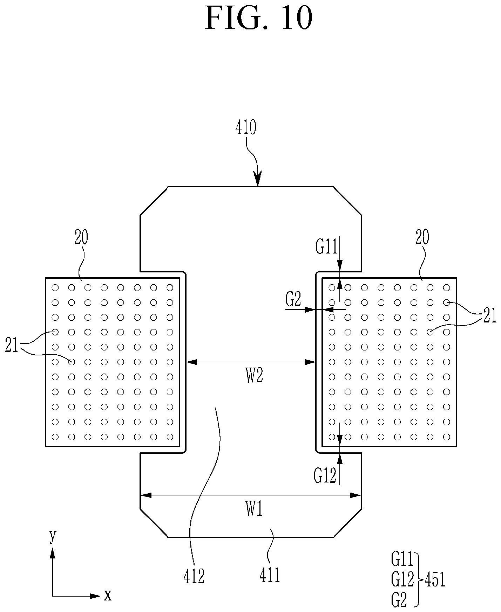

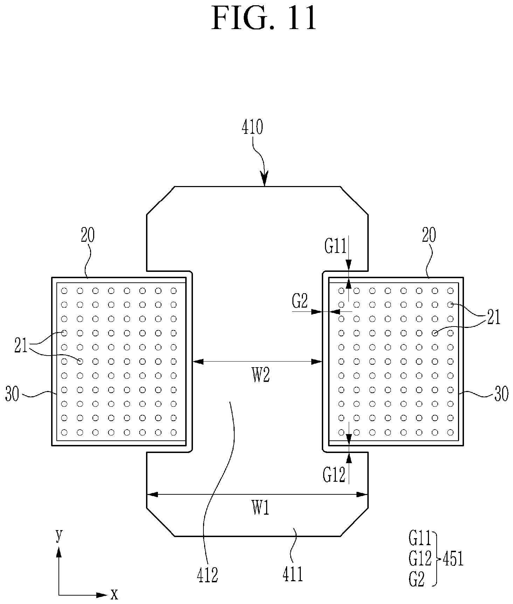

FIG. 10 is a plan view of a cell seating jig and a bending jig applied to an electrode assembly taping device of the rechargeable battery according to some embodiments of the present disclosure, and FIG. 11 is a plan view in a state in which a tape is vacuum-adsorbed to the cell seating jig and the bending jig of FIG. 10, according to some embodiments.

Referring to FIG. 10 and FIG. 11, the cell seating jig 410 may include a first width portion 411 having a first width W1 along a width direction (an x-axis direction) of the electrode assembly 40, and a second width portion 412 having a second width W2 smaller than the first width W1 at a central portion of the electrode assembly 40 along a length direction.

The bending jig 20 may be spaced apart by a first vertical gap G11, a second vertical gap G12, and a first horizontal gap G2 set between outer portions of the first width portion 411 and the second width portion 412 disposed in a length direction (a y-axis direction) of the electrode assembly 40.

Therefore, the non-contact portion 451 may include the first vertical gap G11, the second vertical gap G12, and the first horizontal gap G2 formed between the outer portions of the first width portion 411 and the second width portion 412 and the bending jig 20.

In the length direction, both ends of the tape 30 may be disposed at the first vertical gap G11 and the second vertical gap G12 such that both ends of the tape 30 are not in contact with the cell seating jig 410, and in the width direction, one end of the tape 30 may be disposed at the second gap G2 such that the one end of the tape 30 in the width direction is not contact with the cell seating jig 410.

In a first step ST1 of an electrode assembly taping method according to some embodiments, both ends of the tape 30 in the length direction of the electrode assembly 40 and one end of the tape 30 in the width direction may be disposed between an end portion of the cell seating jig 410 and an end portion of the bending jig 20 in the width direction at both sides of the width direction of the electrode assembly 40 such that both ends of the tape 30 in the length direction and one end of the tape 30 in the width direction are not in contact with the cell seating jig 410.

As a result, an adhesive exposed at an outer portion of a cutting line of the tape 30 may be at least partially prevented from being attached to the cell seating jig 410 and being gradually deposited over time. Therefore, in some embodiments, a stain may not occur on the electrode assembly 40 after the taping, and detachment of an electrode plate and lifting of a case may be at least partially prevented after primary sealing.

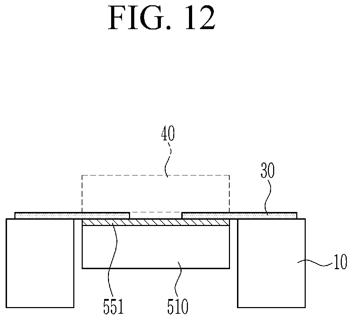

FIG. 12 is a plan view in a state in which a tape is vacuum-adsorbed to a cell seating jig and a bending jig applied to an electrode assembly taping device of the rechargeable battery according to some embodiments of the present disclosure.

Referring to FIG. 12, a non-contact portion 551 may include a Teflon (RTM) resin layer provided on the cell seating jig 510. The provided Teflon (RTM) resin layer may be simultaneously applied to any embodiments described in the present disclosure. The non-contact portion 551 may use a property of a Teflon (RTM) resin to prevent an adhesive of the tape 30 from being attached to the non-contact portion 551.

As a result, the adhesive exposed at an outer portion of a cutting line of the tape 30 may be prevented from being attached to the cell seating jig 510 and being gradually deposited over time. Therefore, in some embodiments, a stain may not occur in the electrode assembly 40 after the taping, and detachment of an electrode plate and lifting of a case may be at least partially prevented after primary sealing. With the Teflon (RTM) resin, this can be achieved even if either end of the tape 30 in the length direction or said one end of the tape 30 in the width direction are in contact with the cell seating jig 410.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

## Claims

1. An electrode assembly taping device of a rechargeable battery, comprising:
a cell seating jig;
a bending jig separately disposed at both sides of the cell seating jig, the bending jig capable of adsorbing a cut tape and relatively raising and/or lowering the cell seating jig in a height direction;
a gripper capable of introducing a wound or stacked electrode assembly and seating the electrode assembly on the cell seating jig; and
an attachment roller capable of attaching the tape to the electrode assembly together with a relative raising and lowering operation of the cell seating jig and the bending jig and an operation of the gripper,
wherein the cell seating jig comprises a non-contact portion that is not in contact with an outer portion of the tape.

2. The electrode assembly taping device as claimed in claim 1, wherein the gripper is capable of attaching a lower surface of the electrode assembly to the tape by seating the electrode assembly, the cell seating jig and the bending jig are capable of performing primary bending of the tape by relatively raising and lowering the cell seating jig and attaching the tape to a side surface of the electrode assembly, and the attachment roller is capable of rolling an upper surface of the bending jig and an upper surface of the electrode assembly to perform secondary bending of the tape and attaching the tape to the upper surface of the electrode assembly.

3. The electrode assembly taping device as claimed in claim 1 or claim 2, wherein the non-contact portion is disposed to correspond to both sides of the electrode assembly along a width direction, and includes a first cutout portion and a second cutout portion formed to correspond to both ends of the tape in a length direction, and optionally in the length direction, both ends of the tape are disposed at the first cutout portion and the second cutout portion such that the both ends of the tape are not in contact with the cell seating jig.

4. The electrode assembly taping device as claimed in claim 1 or claim 2, wherein the non-contact portion is formed as a cutout portion or an escape groove.

5. The electrode assembly taping device as claimed in claim 1 or claim 2, wherein the non-contact portion is disposed to correspond to both sides of the electrode assembly along a width direction, the non-contact portion comprises a first escape groove and a second escape groove, the first escape groove and a second escape groove formed to correspond to both ends of the tape in a length direction, and a third escape groove connected to an end of the first escape groove and an end of the second escape groove corresponding to an end portion of the tape in the width direction, and optionally wherein in the length direction, both ends of the tape are disposed at the first escape groove and the second escape groove such that both ends of the tape are not in contact with the cell seating jig, and in the width direction, one end of the tape is disposed at the third escape groove such that the one end of the tape is not in contact with the cell seating jig.

6. The electrode assembly taping device as claimed in any one of the preceding claims, wherein the non-contact portion is set at a gap spaced apart from the tape adsorbed on the bending jig.

7. The electrode assembly taping device as claimed in claim 1 or claim 2, wherein the non-contact portion is disposed to correspond to both sides of the electrode assembly along a width direction, and the cell seating jig has a width less than a gap between both tapes in the width direction, and optionally wherein both ends of the tape in a length direction and one end of the tape in the width direction are disposed between an end portion of the cell seating jig and an end portion of the bending jig in the width direction such that the both ends of the tape in a length direction and the one end of the tape in the width direction are not in contact with the cell seating jig.

8. The electrode assembly taping device as claimed in claim 1 or claim 2, wherein the cell seating jig comprises a first width portion having a width along a width direction of the electrode assembly and a second width portion at a central portion of the electrode assembly along a length direction, the second width having a width less than the first width, and the bending jig is spaced apart by a first vertical gap, a second vertical gap, and a first horizontal gap set between outer portions of the first width portion and the second width portion disposed in a length direction of the electrode assembly, and optionally wherein the non-contact portion includes the first vertical gap, the second vertical gap, and the first horizontal gap formed between the outer portions of the first width portion and the second width portion and the bending jig, and optionally wherein in the length direction, both ends of the tape are disposed in the first vertical gap and the vertical gap such that both ends of the tape are not in contact with the cell seating jig, and in the width direction, one end of the tape is disposed in the second gap such that the one end of the tape is not in contact with the cell seating jig^{.}

9. The electrode assembly taping device as claimed in any one of the preceding claims, wherein the non-contact portion comprises a Teflon resin layer provided on the cell seating jig.

10. An electrode assembly taping method of a rechargeable battery, comprising:
a first step comprising vacuum-adsorbing a cut tape with a bending jig separated from a cell seating jig;
a second step comprising attaching the tape to a wound or stacked electrode assembly; and
a third step comprising taking out the electrode assembly to which the tape is attached from a cell seating jig with a gripper,
wherein in the first step, an outer portion of the tape is disposed at a non-contact portion of the cell seating jig not to be in contact with the cell seating jig.

11. The electrode assembly taping method as claimed in claim 10, wherein the second step comprises:
a first sub-step comprising introducing the electrode assembly by the gripper such that the electrode assembly is seated on the cell seating jig and attaching the tape to a lower surface of the electrode assembly;
a second sub-step comprising attaching the tape to a side surface of the electrode assembly by bending the tape with both bending jigs while relatively moving the cell seating jig and the bending jig in a height direction; and
a third sub-step of attaching the tape to an upper surface of the electrode assembly by bending with an attachment roller after a relative movement of the cell seating jig and the bending jig is completed.

12. The electrode assembly taping method as claimed in claim 10 or claim 11, wherein in the first step, both ends of the tape in a length direction of the electrode assembly are respectively disposed at a first cutout portion and a second cutout portion of the cell seating jig, at both sides of the electrode assembly, along a width direction such that the both ends of the tape in the length direction of the electrode assembly are not in contact with the cell seating jig.

13. The electrode assembly taping method as claimed in claim 10 or claim 11, wherein in the first step, both ends of the tape in a length direction of the electrode assembly are respectively disposed at a first escape groove and a second escape groove of the cell seating jig at both sides of the electrode assembly along a width direction such that the both ends of the tape in the length direction of the electrode assembly are not in contact with the cell seating jig, and in the width direction, one end of the tape is disposed at a third escape groove connecting the first escape groove and the second escape groove such that the one end of the tape is not in contact with the cell seating jig.

14. The electrode assembly taping method as claimed in claim 10 or claim 11, wherein in the first step, both ends of the tape in a length direction of the electrode assembly and one end of the tape in a width direction are disposed between an end portion of the cell seating jig and an end portion of the bending jig in the width direction at both sides of the width direction of the electrode assembly such that the both ends of the tape in a length direction and the one end of the tape in a width direction are not in contact with the cell seating jig.

15. The electrode assembly taping method as claimed in claim 10 or claim 11, wherein in the first step, both ends of the tape in a length direction are disposed at a first vertical gap and a second vertical gap between a pair of first width portions disposed at both sides of the electrode assembly along the length direction of the cell seating jig, such that the both ends of the tape in a length direction are not in contact with the cell seating jig, and one end of the tape in a width direction is disposed at a second gap between a second width portion disposed at a middle of a length direction and the bending jig, such that the one end of the tape in a width direction are not in contact with the cell seating jig.
